# EUROPÄISCHE PATENTSCHRIFT

(11) **EP 4 620 766 B1**
(45) Veröffentlichungstag und Bekanntmachung des Hinweises auf die Patenterteilung: **18.11.2026**
(21) Anmeldenummer: 25163741.9
(22) Anmeldetag: 14.03.2025
(51) Int. Cl.: B60W 40/112

(54) **VERFAHREN UND VORRICHTUNG ZUR ERMITTLUNG DER SEITLICHEN AUSLENKUNG DES MASSE-SCHWERPUNKTS BEI EINEM ZWEIRAD**
METHOD AND DEVICE FOR DETERMINING THE LATERAL DEFLECTION OF THE CENTER OF GRAVITY OF A TWO-WHEELED VEHICLE
PROCÉDÉ ET DISPOSITIF DE DÉTERMINATION DE L'ORIENTATION LATÉRALE DU CENTRE DE GRAVITÉ DE MASSE D'UN DEUX ROUES

(30) Priorität: 19.03.2024 DE 102024202576
(43) Veröffentlichungstag der Anmeldung: 24.09.2025
(73) Patentinhaber: Robert Bosch GmbH, 70442 Stuttgart (DE)
(72) Erfinder: Stolle, Karl Ludwig, 71272 Renningen (DE)

(56) Entgegenhaltungen:
- EP-A2- 1 795 901
- DE-A1- 102006 061 483
- DE-A1- 102017 210 500
- US-A1- 2016 375 948
- US-B2- 10 919 358

## Beschreibung

### Stand der Technik

Die vorliegende Erfindung betrifft ein Verfahren und eine Vorrichtung zum Betreiben eines Zweirads. Weiterhin betrifft die Erfindung ein Zweirad mit einer derartigen Vorrichtung, sowie ein Computerprogramm.

Moderne Zweiräder sind mit verschiedenen Fahrassistenzsystemen ausgestattet, die den Fahrer unterstützen und zu diesem Zwecke während der Fahrt laufend Daten erfassen und auswerten. Eine für Zweiräder relevante Größe ist die Schräglage des Zweirads, insbesondere bei Kurvenfahrten.

In der Schrift DE 10 2017 210 500 A1 ist ein System beschrieben, das den Schräglagenwinkel eines Zweirads erfasst und in einem Fahrprofil abspeichert. Weiter ist in der Schrift EP 3 458 354 B1 ein System beschrieben, das zur Stabilisierung von Zweirädern beiträgt, insbesondere bei Kurvenfahrten, indem es den Fahrzustand des Zweirads simuliert und basierend auf dieser Simulation fahrdynamische Eingriffe vornimmt. Auch hier ist die Schräglage des Zweirads von besonderer Relevanz.

Beide vorgestellten Systeme bedienen sich hierbei des Schräglagewinkels des Zweirads, lassen aber außer Acht, dass dieser auf einem Zweirad durch den Fahrer und sein Gewicht leicht beeinflusst werden kann, da das Gewicht des Zweirades und das des Fahrers in ähnlichen Größenordnungen liegen. Aufgabe der Erfindung ist es, ein Maß für den Einfluss des Fahrers zur Verfügung zu stellen.

Die US 2016/0375948 A1 beschreibt eine Steuereinrichtung eines mobilen Körpers, der einen Index-Wert des Schwerpunktes des Verschiebungsgrads berechnet, der eine Schätzung des Verlagerungsgrades des Schwerpunktes des Bedieners in Querrichtung eines Fahrzeugkörpers darstellt

Aus der DE 10 2006 061 483 A1 ist ein Verfahren bekannt, welches zur Bestimmung eines Rollwinkels eines Kraftrades verwendet wird.

In der US 10,919,358 B2 wird eine Einstellungsschätzvorrichtung offenbart, umfassend eine Einstellungsschätzeinheit zum Schätzen des Rollwinkels und des Nickwinkels eines bewegbaren Körpers und zum Verwenden eines Berechnungsprozesses zum Schätzen eines Offset-Fehlers.

DE 10 2017 210 500 A1 beschreibt ein Verfahren zum Betreiben eines Fahrerassistenzsystems für ein Zweirad.

### Offenbarung der Erfindung

Das Verfahren mit den Merkmalen des unabhängigen Anspruchs stellt eine Größe für eine seitliche Auslenkung des Masseschwerpunkts eines Zweirads zur Verfügung, die sich aus der individuellen Gewichtsverlagerung eines Fahrers ergibt, insbesondere in einer Kurvenfahrt. Dies hat den Vorteil, dass eine Größe zur Verfügung steht, die den Einfluss des Fahrers auf die Fahrdynamik des Zweirads bewertet.

Dazu wird ein Verfahren zur Ermittlung der seitlichen Auslenkung eines Masseschwerpunkts bei einem Zweirad vorgestellt. Hierbei wird eine Gierratengröße erfasst, die eine Gierrate des Zweirads repräsentiert. Weiter wird eine Geschwindigkeitsgröße erfasst, die eine Geschwindigkeit des Zweirads in Fahrtrichtung repräsentiert. Aus dieser Gierratengröße und der Geschwindigkeitsgröße wird ein erster Rollwinkel bestimmt. Es wird ein zweiter Rollwinkel erfasst, der dem Rollwinkel des Zweirads entspricht. Aus dem ersten und dem zweiten Rollwinkel wird eine Distanzgröße erzeugt, die eine seitliche Auslenkung des Masseschwerpunkts des Zweirads repräsentiert.

Diese momentane Distanzgröße kann von einem Fahrer des Zweirads beeinflusst werden, in Abhängigkeit seiner Position auf dem Zweirad. Der Fahrer des Zweirads kann sich auf diesem bewegen, seine Körperhaltung anpassen und es ist ihm möglich, seinen Schwerpunkt auf dem Zweirad zu verlagern. Das Gewicht eines Zweirads ist typischerweise je nach Zweiradtyp und Fahrer um einen Faktor 1 bis 4 größer als das des Fahrers. Somit wirkt sich eine Verlagerung des Fahrerschwerpunkts auch auf den Schwerpunkt des Gesamtsystems und damit die Fahrdynamik aus. Lehnt sich ein Fahrer also zu einer Seite, wird die Distanzgröße, die die seitliche Auslenkung des Masseschwerpunktes repräsentiert, in dieser Richtung größer. Dies gilt insbesondere in Kurvenfahrten. Der Fahrer kann sich dabei aktiv in die Kurve hineinlegen und wird so den Schwerpunkt des Gesamtsystems in Richtung des Kurvenmittelpunkts verschieben, beispielsweise bei einer sehr sportlichen Fahrweise. Der Fahrer kann sich aber auch nur wenig in die Kurve legen oder eine aufgerichtete Fahrposition beibehalten, bei der er nur das Zweirad in die Kurve legt. Dies könnte bei unerfahrenen Fahrern oder einer defensiven Fahrweise der Fall sein. In diesem Fall wird er so den Schwerpunkt des Gesamtsystems in Richtung des Kurvenäußeren verschieben.

Da der Rollwinkel eines Zweirads einfach zu messen ist, kann dieser als Berechnungsgrundlage genutzt werden. Aus der Gierrate und Geschwindigkeit lässt sich ein Rollwinkel berechnen, der aufgrund der Fahrdynamik vorliegt und dieser kann mit dem gemessenen Rollwinkel verglichen werden. Bezogen auf den Schwerpunkt des Gesamtsystems ergibt sich damit eine Differenz zwischen gemessener und berechneter Schwerpunktslage, die Distanzgröße.

Die Distanzgröße, kann einen positiven oder einen negativen Wert annehmen. Das Vorzeichen gibt die Richtung der Auslenkung des Masseschwerpunkts an.

Zum besseren Verständnis sei angemerkt, dass mit dem Masseschwerpunkt eines Zweirades hier immer der Schwerpunkt des Gesamtsystems gemeint ist. Dieses kann neben dem Fahrer auch einen Sozius und/oder Gepäck beinhalten. Weiter handelt es sich bei der seitlichen Auslenkung um eine Auslenkung in der y-z-Ebene des Zweirads. Zur Definition der Ebene, in welcher die Auslenkung sattfindet, kann auch die DIN ISO 8855 herangezogen werden.

Durch die in den abhängigen Ansprüchen aufgeführten Maßnahmen sind vorteilhafte Weiterbildungen und Verbesserungen des im unabhängigen Anspruch angegebenen Verfahrens möglich.

Es ist vorteilhaft, wenn bei der Bestimmung des ersten Rollwinkels weitere Kenngrößen des Zweirads, welche dieses geometrisch beschreiben und Einfluss auf den Rollwinkel haben können, berücksichtigt werden. Dies könnten beispielsweise die Kontur der Reifen, die Länge des Radstandes oder die Höhe des Zweirads sein, oder ein Lenkwinkel des Motorrads sein.

Dies hat den Vorteil, dass die Bestimmung des ersten Rollwinkels mit einer größeren Genauigkeit erfolgen kann.

Erfindungsgemäß werden bei der Bestimmung des ersten Rollwinkels biometrische Parameter berücksichtigt, die die Eigenschaften des Fahrers des Zweirads repräsentieren, wie beispielsweise sein Gewicht oder seine Körpergröße, da diese einen Einfluss auf die Schwerpunktslage haben können. So wird bei einem kleinen, leichten Fahrer der Schwerpunkt des Gesamtsystems an anderer Stelle liegen als bei einem großen, schweren Fahrer.

Dies hat den Vorteil, dass die Bestimmung des ersten Rollwinkels mit einer größeren Genauigkeit erfolgen kann.

Es ist zweckmäßig, wenn eine maximale Distanzgröße in Abhängigkeit fahrdynamischer Zustandsgrößen, auch Fahrdynamikzustände genannt, insbesondere der Gierrate, Geschwindigkeit und des Rollwinkels erzeugt wird. Diese maximale Distanzgröße repräsentiert eine maximale seitliche Auslenkung des Masseschwerpunkts, bei der das Zweirad noch stabil fährt, insbesondere bei einer Kurvenfahrt. Es wird ein Vergleich dieser maximalen Distanzgröße mit der momentanen Distanzgröße durchgeführt und das Ergebnis des Vergleichs an ein Fahrerassistenzsystem übermittelt und/oder dem Fahrer des Zweirads mitgeteilt. Dies kann beispielsweise durch eine optische Anzeige in einem Display im Sichtbereich des Fahrers geschehen und/oder durch eine akustische Meldung.

Dies ist insofern vorteilhaft, dass der Vergleichswert als Sicherheitsdistanz verstanden werden kann. Diese Distanz sagt aus, wie groß der Abstand zwischen der aktuellen Schwerpunktslage und einer kritischen Schwerpunktslage ist und kann als Maß für die Bewertung des Fahrzustands genutzt werden. Je kleiner die Distanz umso näher bewegt sich das Zweirad am Grenzbereich in dem es noch sicher betrieben werden kann. Die Kenntnis dieses Wertes kann auch die Basis für weiterführende Maßnahmen entweder durch das Fahrassistenzsystem oder den Fahrer darstellen.

Es kann auch zweckmäßig sein, wenn aus der erfassten momentanen Distanzgröße und Fahrdynamikzuständen ein Fahrdynamikprofil erstellt wird. Dabei ist den jeweiligen Fahrdynamikzuständen eine aus allen vorigen Fahrten gemittelte Distanzgröße zugeordnet.

Vorteil ist hierbei, dass ein Datensatz zur Verfügung steht, mit welchen Schwerpunktslagen der Fahrer des Zweirads typischerweise in bestimmten fahrdynamischen Situationen fährt. So kann festgestellt werden bei welchen Kurvengeschwindigkeiten und Rollwinkeln welche Schwerpunktslage das Zweirad über mehrere Fahrten gemittelt typischerweise einnimmt. Es ergibt sich ein für den Fahrer repräsentatives Profil, aus welchem das fahrerische Können des Fahrers ableitbar ist.

Es sei angemerkt, dass als Fahrdynamikzustände die bereits erwähnte Gierratengröße und/oder Geschwindigkeitsgröße verwendet werden können. Darüber hinaus können weitere Zustandsgrößen verwendet werden, wie beispielsweise, Beschleunigung, Kurvengeschwindigkeit, Einstellungen am Zweirad, wie gewählter Gang und Gashebelstellung und weitere.

Weiter kann es zweckmäßig sein, wenn eine Trainingsdistanzgröße ermittelt wird, indem die in dem Fahrdynamikprofil gemittelte Distanzgröße mit einem Trainingsfaktor multipliziert wird. Dieser Trainingsfaktor kann durch den Fahrer oder ein Fahrassistenzsystem festgelegt werden. Es wird ein Vergleich der gemittelten Distanzgröße mit der Trainingsdistanzgröße durchgeführt. Das Ergebnis des Vergleichs wird an ein Fahrerassistenzsystem übermittelt und/oder dem Fahrer des Zweirads mitgeteilt, insbesondere durch eine optische Anzeige oder akustische Meldung.

Dies ist insofern vorteilhaft, dass eine Größe zur Verfügung steht, die als Zielgröße zur Verbesserung des fahrerischen Könnens des Fahrers genutzt werden kann. Beispielhaft kann ein Fahrer auf einer Strecke, die er sehr gut kennt und häufig fährt, einen Trainingsfaktor wählen, der ihn zu einer größeren Gewichtsverlagerung und damit aktiveren Fahrweise motiviert, um beispielsweise einen flüssigeren Fahrstil zu erlauben. Die Trainingsdistanzgröße liegt von ihrem Betrag zwischen der momentanen Distanzgröße und der maximalen Distanzgröße. Dadurch dass die Trainingsdistanzgröße kleiner ist als die maximal mögliche Distanzgröße begibt er sich auch nicht in Gefahr aufgrund einer Überschätzung seiner Fähigkeiten die Kontrolle über sein Zweirad zu verlieren. Denkbar wäre auch, diesen Trainingsfaktor bei Motorradrennen zu nutzen, um schnellere Rundenzeiten zu erzielen. Es ist weiterhin denkbar, diesen Trainingsfaktor zu nutzen um das fahrerische Können unter schwierigen Bedingungen, wie beispielsweise einer nassen Fahrbahn zu trainieren.

Vorteilhaft ist auch, wenn die Distanzgröße an ein Fahrassistenzsystem übermittelt wird, das in Abhängigkeit der Distanzgröße fahrdynamische Zustände des Zweirads anpasst, insbesondere das Zweirad beschleunigt oder verzögert und/oder einen Lenkwinkel anpasst.

Dadurch kann die Fahrsicherheit erhöht werden, indem das Fahrassistenzsystem das Zweirad so ansteuert, dass Situationen, in denen das Zweirad instabil wird, vermieden werden, oder das Zweirad in einen stabilen Fahrzustand überführt wird, sollte eine instabile Fahrsituation auftreten.

Weiterhin wird eine Vorrichtung beansprucht, welche Verfahrensschritte des erfindungsgemäßen Verfahrens durchführt. Eine derartige Vorrichtung kann beispielsweise in einem Zweirad integriert oder in Form eines Smartphones realisiert sein.

Es ist insbesondere vorteilhaft, wenn ein Zweirad diese Vorrichtung enthält und diese Vorrichtung auch ein Steuergerät umfasst. Dieses Steuergerät kann aus den im Verfahren erzeugten Parametern Stellgrößen für weitere Komponenten des Zweirads erzeugen und diese dann ansteuern, insbesondere Bremsen, Lenkung oder einen Antrieb.

Weiterhin wird ein Computerprogramm zur Ausführung des erfindungsgemäßen Verfahrens beansprucht, welches beispielsweise in der Vorrichtung selbst, einem Steuergerät oder einer App auf einem Smartphone ablaufen kann.

### Kurze Beschreibung der Zeichnungen

Ausführungsbeispiele der Erfindung sind in den Zeichnungen dargestellt und in der nachfolgenden Beschreibung näher erläutert.
- Figur 1: eine Darstellung von Betriebsparametern bei einem Zweirad
- Figur 2: eine erfindungsgemäße Vorrichtung
- Figur 3: eine erfindungsgemäße Ausführung des Verfahrens
- Figur 4: eine erfindungsgemäße Ergänzung des Verfahrens
- Figur 5: eine erfindungsgemäße Ergänzung des Verfahrens

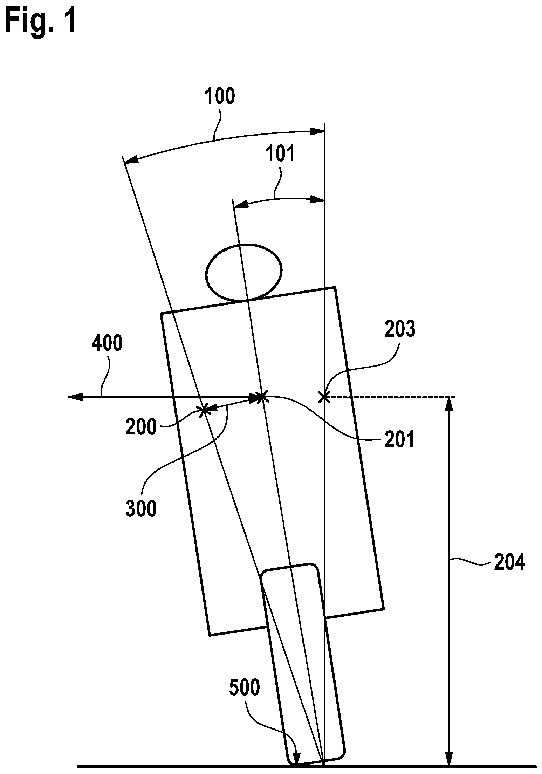

Figur 1 zeigt schematisch ein Zweirad, das seitlich geneigt ist, beispielsweise aufgrund einer Kurvenfahrt. Dargestellt ist der erste Rollwinkel 100 im Weiteren auch mit *φₜₕ* bezeichnet, der sich aus fahrdynamischen Zustandsgrößen ergibt, sowie die zugehörige ermittelte Schwerpunktslage 200, die die tatsächlich vorliegende Schwerpunktslage beschreibt. Weiter ist der gemessene Rollwinkel 101, im Weiteren auch mit *φ* bezeichnet gezeigt. Dieser beschreibt die Verkippung der Z-Achse des Zweirads. Die Schwerpunktslage 201 beschreibt dabei die Lage des Gesamtschwerpunkts, die vorliegen würde, würde sich der Fahrer nicht auf dem Zweirad bewegen und sich ebenfalls um den Rollwinkel 101 mit dem Zweirad neigen.

Weiter sind gezeigt die Höhe 204 des Schwerpunkts in aufrechter Fahrt, auch mit *h_{CoG}* bezeichnet, sowie die Verschiebung 300 der Schwerpunktslage orthogonal zur verkippten z-Achse des Zweirads, auch *y_{CoG,offset}* genannt. Außerdem ist ein Parameter für die Reifenkontur 500, *Rₜ* dargestellt, der als Korrekturfaktor berücksichtigt werden kann, da die seitliche Neigung auch von dessen geometrischer Ausformung abhängt. Unter Berücksichtigung der horizontalen Beschleunigung *a_{y}* 400 und der Gewichtskraft *g* kann der erste Rollwinkel 100 berechnet werden, zum Beispiel gemäß folgender Formel: ${φ}_{th} = {tan}^{- 1} \left(\frac{- {a}_{y , hor}}{g}\right) + {sin}^{- 1} \left(\frac{{R}_{t}}{{h}_{CoG} - {R}_{t}}sin\left({tan}^{- 1}\left(\frac{- {a}_{y , hor}}{g}\right)\right)\right)$

Aus der Differenz des ersten Rollwinkels 100 und zweiten Rollwinkels 101 lässt sich dann die seitliche Verschiebung 300 der Schwerpunktslage berechnen, beispielsweise mit folgender Formel: ${y}_{CoG , offset} = sin \left(φ-{φ}_{th}\right) \left({h}_{CoG}-{R}_{t}\right)$

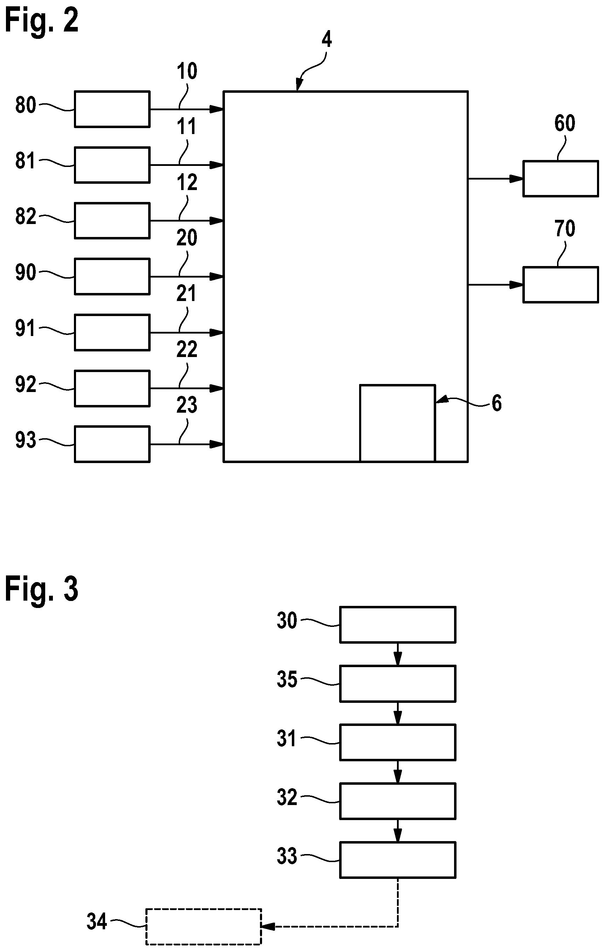

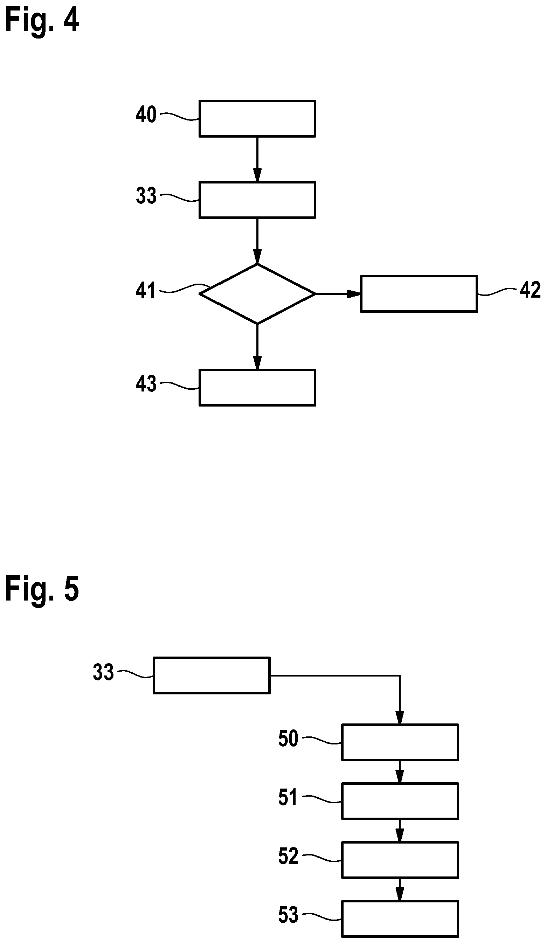

Figur 2 zeigt schematisch eine erfindungsgemäße Vorrichtung 4 die ein erfindungsgemäßes Verfahren ausführt, wie es in Figur 3 und Figur 4 beschrieben wird.

Eine erfindungsgemäße Vorrichtung 4 kann eine Gierratengröße 10, eine Geschwindigkeitsgröße 11 und eine Rollwinkelgröße 12 erfassen Diese Größen können beispielsweise mittels eines Giarratensensors 80, eines Geschwindigkeitssensors 81 und eines Rollwinkelsensors 82 erfasst werden. Diese Sensoren können Teil des Zweirads sein, aber auch Teil einer separaten Vorrichtung wie beispielsweise einem Smartphone. Die Vorrichtung 4 kann auch Kenngrößen 20 erfassen, die das Zweirad geometrisch beschreiben. Dies können insbesondere eine Kontur der Reifen sein. Es ist auch denkbar, dass diese die Länge des Radstandes des Zweirades sind. Als Kenngröße könnte aber auch die Höhe des Zweirads herangezogen werden. Diese Parameter können über eine Schnittstelle 90 eingegeben werden. Diese Schnittstelle kann beispielsweise mit Bedienelementen am Zweirad verbunden sein, oder mit einer externen Eingabequelle wie beispielsweise einem Smartphone. Weiter kann die Vorrichtung 4 biometrische Parameter 21 des Fahrers erfassen, wie beispielsweise seine Körpergröße oder sein Gewicht. Bei diesen Parametern ist es denkbar, diese über eine Schnittstelle 91 zu erfassen, die beispielsweise mit einer Eingabevorrichtung oder einem Smartphone verbunden ist. Weiter kann die Vorrichtung 4 aber auch Eingaben 22 des Fahrers erfassen. Die Erfassung dieser Daten könnte über eine Schnittstelle 92 erfolgen, die mit einer weiteren Eingabevorrichtung oder einem Smartphone verbunden ist. Diese Daten können beispielsweise ein Trainingsfaktor sein, mit welchem der Fahrer das Zweirad betreiben möchte. Die Vorrichtung 4 kann aber auch Daten 23, gesendet von einem Steuergerät 93 des Zweirads, erfassen. Es kann sich beispielsweise um ein Steuergerät handeln, das die Fahrdynamik des Zweirads beeinflusst und die Daten können fahrdynamische Größen sein. Die Vorrichtung 4 kann auch einen Speicher 6 umfassen, in dem beispielsweise historische Fahrdaten abgespeichert sein können. Die Schnittstellen 90, 91 und 92 können dabei mit derselben oder voneinander Verschiedenen Eingabevorrichtungen verbunden sein. Ebenso können diese Schnittstellen zusätzlich oder alternativ mit einem Smartphone verbunden sein, bei dem die oben beschriebenen Daten von einer App bereitgestellt werden.

Die Vorrichtung 4 kann auch Werte ausgeben. Diese können an ein weiteres Steuergerät 60, das beispielsweise Teil eines Fahrassistenzsystems ist, ausgegeben werden. Das Steuergerät 60 und 93 können dabei Teil desselben Fahrassistenzsystems sein. Diese Werte können aber auch an ein Informationssystem 70 ausgegeben werden, das die ermittelten Werte dem Fahrer des Zweirads zur Verfügung stellt, beispielsweise über eine optische Anzeige oder eine akustische Ausgabe.

Figur 3 zeigt schematisch eine Ausführungsform des Verfahrens. In einem ersten Schritt 30 wird wenigstens eine Gierratengröße erfasst, die die Gierrate eines Zweirads repräsentiert. In einem Schritt 35 wird eine Geschwindigkeitsgröße erfasst, die die Geschwindigkeit des Zweirads repräsentiert. In einem nächsten Schritt 31 wird ein erster Rollwinkel 100 aus der Gierratengröße und der Geschwindigkeit gebildet. In einem Schritt 32 wird ein zweiter Rollwinkel 101 erfasst, der dem Rollwinkel des Zweirads entspricht. In Schritt 33 wird die Differenz zwischen dem ersten Rollwinkels und dem zweiten Rollwinkel bezogen auf die Lage des Masseschwerpunkts berechnet. Dabei kann ein positiver oder negativer Wert entstehen, wobei das Vorzeichen die Richtung der Auslenkung des Masseschwerpunkts charakterisiert. Das Ergebnis ist eine momentane Distanzgröße, die eine seitliche Auslenkung des Masseschwerpunkts 300 des Zweirads repräsentiert. Eine positive Distanzgröße kann dabei eine Auslenkung um die Distanzgröße zum Kurveninneren repräsentieren, eine negative Distanzgröße kann dabei eine Auslenkung um die Distanzgröße zum Kurvenäußeren repräsentieren. In einem optionalen Schritt 34 kann diese Größe einem Fahrassistenzsystem zur Verfügung gestellt werden. Dieses kann dann je nach Auslenkungsrichtung die Fahrdynamik beeinflussen, beispielsweise könnte bei einer Auslenkung zum Kurveninneren hin Maßnahmen, die ein seitliches Wegrutschen verhindern oder Stabilisierungsmaßnahmen durchgeführt werden.

Das Verfahren kann wie in Figur 4 gezeigt, mit zusätzlichen Schritten erweitert werden. So kann in einem Schritt 40 eine maximale seitliche Auslenkung bestimmt werden, bei der das Zweirad noch sicher betrieben werden kann. Diese maximale seitliche Auslenkung kann in einem Schritt 41 mit der Auslenkung des Masseschwerpunkts aus Schritt 33 verglichen werden. Ist die aktuelle seitliche Auslenkung kleiner als die maximal mögliche Auslenkung kann das Ergebnis des Vergleichs in einem Schritt 42 einem Fahrassistenzsystem oder einem Informationssystem für den Fahrer bereitgestellt werden.

Sind die aktuelle seitliche Auslenkung und die maximal mögliche Auslenkung gleich groß, so kann in einem Schritt 43 eine Warnmeldung an den Fahrer ausgegeben werden und ein Fahrassistenzsystem greift in die Fahrdynamik ein. Es ist möglich, hier einen Sicherheitsfaktor vorzusehen, ab wann der Fahrer gewarnt wird oder das Fahrassistenzsystem eingreift um ausreichend Zeit zur Korrektur des Fahrzustandes zu gewährleisten. Ist die aktuelle seitliche Auslenkung größer als die maximal mögliche seitliche Auslenkung, so befindet sich das Zweirad in einem Fahrzustand, in dem es nicht mehr sicher betrieben werden kann. Dieser Zustand ist beispielsweise durch den Fahrer oder das Fahrassistenzsystem zu vermeiden.

Eine weitere mögliche Erweiterung des Verfahrens ist in Figur 5 dargestellt. Aus der erfassten momentanen Distanzgröße 300 und erfassten Fahrdynamikzuständen kann ein Fahrdynamikprofil erstellt werden, dies geschieht in Schritt 50. In diesem Fahrdynamikprofil kann den jeweiligen Fahrdynamikzuständen eine aus allen vorigen Fahrten gemittelte Distanzgröße im Fahrdynamikprofil zugeordnet werden. In einem Schritt 51 kann ein Trainingsfaktor erfasst werden, beispielsweise durch Eingabe eines Fahrers oder übermittelt durch ein Assistenzsystem. Dieser Trainingsfaktor stellt eine Größe dar, mit der die mittlere Distanzgröße aus allen vorigen Fahrten in Schritt 52 multipliziert wird. Es ergibt sich so eine Trainingsdistanzgröße, die um den Trainingsfaktor größer oder kleiner ist als die mittlere Distanzgröße, die bei den jeweiligen Fahrdynamikzuständen in den vorigen Fahrten vorlag. Es steht damit ein Zielwert zur Verfügung anhand dessen das fahrerische Können trainiert werden kann. Diese Trainingsdistanzgröße kann dann in einem Schritt 53 einem Fahrassistenzsystem oder einem Informationssystem für den Fahrer bereitgestellt werden. Hier ist es auch möglich die aktuelle Distanzgröße aus Schritt 33 als Vergleichswert anzuzeigen.

Beispielsweise kann der Fahrer einen Trainingsfaktor größer 1 wählen und wird dann während der Fahrt, beispielsweise auf einer Strecke, die er kennt, eine Trainingsdistanzgröße angezeigt bekommen, die größer ist als die Distanzgröße, die er auf dieser Strecke üblicherweise fährt. Will er sein fahrerisches Können verbessern, so steht ihm nun eine Zielgröße zur Verfügung, die ihm Auskunft gibt, wie weit er seinen Schwerpunkt und damit den Schwerpunkt des Gesamtsystems verschieben muss, um sich gegenüber seinen bisherigen Fahrten zu steigern. So kann beispielsweise ein unerfahrener Fahrer zu einer sichereren Fahrweise gelangen. Umgekehrt ist es auch denkbar einen kleineren Trainingsfaktor zu wählen, um zu einer gemäßigteren Fahrweise zu gelangen, oder anderen Unsicherheiten, wie beispielsweise einem nassen Fahrbahnbelag, Rechnung zu tragen.

## Patentansprüche

1. Verfahren zur Ermittlung der seitlichen Auslenkung des Masseschwerpunkts bei einem Zweirad, wobei das Verfahren
• eine Gierratengröße erfasst (30), die eine Gierrate des Zweirads repräsentiert und
• eine Geschwindigkeitsgröße erfasst (30), die eine Geschwindigkeit des Zweirads in Fahrtrichtung repräsentiert und
• einen ersten Rollwinkel aus der Gierratengröße und der Geschwindigkeitsgröße bestimmt (31), wonach das Verfahren bei der Bestimmung des ersten Rollwinkels biometrische Parameter des Fahrers berücksichtigt, insbesondere ein Gewicht und/oder eine Körpergröße, und
• einen zweiten Rollwinkel erfasst (32), der dem Rollwinkel des Zweirads entspricht, und
• aus dem ersten und dem zweiten Rollwinkel eine Distanzgröße erzeugt, die eine seitliche Auslenkung des Masseschwerpunkts des Zweirads repräsentiert.

2. Verfahren nach Anspruch 1, wonach das Verfahren bei der Bestimmung des ersten Rollwinkels geometrische Kenngrößen des Zweirades berücksichtigt, insbesondere eine Kontur der Reifen und/oder eine Länge des Radstandes und/oder eine Zweiradhöhe.

3. Verfahren nach einem der vorigen Ansprüche, wobei das Verfahren
• eine maximale Distanzgröße in Abhängigkeit fahrdynamischer Zustände erzeugt (40), insbesondere der Gierrate, Geschwindigkeit und des Rollwinkels, und diese maximale Distanzgröße eine maximale seitliche Auslenkung des Masseschwerpunkts repräsentiert, bei der das Zweirad noch stabil fährt, insbesondere bei einer Kurvenfahrt,
• einen Vergleich der maximalen Distanzgröße mit der momentanen Distanzgröße durchführt (41), und
• das Ergebnis des Vergleichs an ein Fahrerassistenzsystem übermittelt und/oder dem Fahrer des Zweirads mitteilt (42), insbesondere durch eine optische Anzeige und/oder akustische Meldung.

4. Verfahren nach einem der vorigen Ansprüche, wonach das Verfahren
• aus der erfassten momentanen Distanzgröße und erfassten Fahrdynamikzuständen ein Fahrdynamikprofil erstellt (50), und
• den jeweiligen Fahrdynamikzuständen eine aus allen vorigen Fahrten gemittelte Distanzgröße im Fahrdynamikprofil zuordnet.

5. Verfahren nach Anspruch 4, wonach das Verfahren eine Trainingsdistanzgröße ermittelt, indem die in dem Fahrdynamikprofil gespeicherte gemittelte Distanzgröße mit einem Trainingsfaktor multipliziert wird,
• wobei der Trainingsfaktor durch den Fahrer oder ein Fahrassistenzsystem festgelegt wird (51), und
• ein Vergleich der gemittelten Distanzgröße und der Trainingsdistanzgröße durchgeführt wird (52), und
• das Ergebnis des Vergleichs an ein Fahrassistenzsystem übermittelt wird und/oder dem Fahrer des Zweirads mitgeteilt wird (53), insbesondere durch eine optische Anzeige oder akustische Meldung.

6. Verfahren nach einem der vorigen Ansprüche, wonach die Distanzgröße an ein Fahrassistenzsystem übermittelt wird (35), und das Fahrassistenzsystem in Abhängigkeit der Distanzgröße fahrdynamische Zustände oder Parameter des Zweirads anpasst, insbesondere das Zweirad beschleunigt oder verzögert und/oder einen Lenkwinkel anpasst.

7. Vorrichtung (4) zur Ermittlung der seitlichen Auslenkung des Masseschwerpunkts (300) bei einem Zweirad, wobei die Vorrichtung (4) eine Auswerteeinheit aufweist, die insbesondere ein Verfahren nach einem der vorigen Ansprüche ausführt,
wobei die Auswerteeinheit
• eine Gierratengröße erfasst (30), die eine Gierrate des Zweirades repräsentiert,
• eine Geschwindigkeitsgröße erfasst (30), die eine Geschwindigkeit des Zweirads in Fahrtrichtung repräsentiert, und
• einen ersten Rollwinkel aus der Gierratengröße und der Geschwindigkeitsgröße bestimmt (31), wonach das Verfahren bei der Bestimmung des ersten Rollwinkels biometrische Parameter des Fahrers berücksichtigt, insbesondere ein Gewicht und/oder eine Körpergröße, und
• einen zweiten Rollwinkel erfasst (32), der dem Rollwinkel des Zweirads entspricht, und
• aus dem ersten und dem zweiten Rollwinkel eine Distanzgröße erzeugt, die eine seitliche Auslenkung des Masseschwerpunkts des Zweirads repräsentiert.

8. Vorrichtung nach Anspruch 7, wobei die Vorrichtung 4 Mittel enthält, die ausgebildet sind, die Fahrdynamik des Zweirads beeinflussen und Stellgrößen für insbesondere mindestens eine Bremse, Lenkung und/oder einen Antrieb bereitzustellen.

9. Zweirad mit einer Vorrichtung nach Anspruch 7 oder 8, welche insbesondere ein Verfahren nach Anspruch 1 bis 6 ausführt.

10. Computerprogramm, das dazu eingerichtet ist, die Schritte des Verfahrens gemäß einem der Ansprüche 1 bis 6 auszuführen und/oder anzusteuern und/oder in einer Auswerteeinheit in einer Vorrichtung (4) nach Anspruch 7 oder 8 durchgeführt wird.

## Claims

1. Method for determining the lateral deflection of the centre of mass of a two-wheeled vehicle, wherein the method
• captures (30) a yaw rate variable representing a yaw rate of the two-wheeled vehicle, and
• captures (30) a speed variable representing a speed of the two-wheeled vehicle in the direction of travel, and
• determines (31) a first roll angle from the yaw rate variable and the speed variable, according to which the method takes into account biometric parameters of the driver, in particular a weight and/or a height, when determining the first roll angle, and
• captures (32) a second roll angle corresponding to the roll angle of the two-wheeled vehicle, and
• generates, from the first and second roll angles, a distance variable representing a lateral deflection of the centre of mass of the two-wheeled vehicle.

2. Method according to Claim 1, according to which the method takes into account geometric characteristic variables of the two-wheeled vehicle, in particular a contour of the tyres and/or a length of the wheelbase and/or a two-wheeled vehicle height, when determining the first roll angle.

3. Method according to one of the preceding claims, wherein the method
• generates (40) a maximum distance variable on the basis of driving dynamics states, in particular the yaw rate, speed and roll angle, and this maximum distance variable represents a maximum lateral deflection of the centre of mass, for which the two-wheeled vehicle is still stable, in particular when cornering,
• compares (41) the maximum distance variable with the current distance variable, and
• transmits the result of the comparison to a driver assistance system and/or communicates (42) it to the driver of the two-wheeled vehicle, in particular by means of an optical display and/or acoustic message.

4. Method according to one of the preceding claims, according to which the method
• creates (50) a driving dynamics profile from the captured instantaneous distance variable and captured driving dynamics states, and
• assigns a distance variable averaged from all previous journeys in the driving dynamics profile to the respective driving dynamics states.

5. Method according to Claim 4, according to which the method determines a training distance variable by multiplying the averaged distance variable stored in the driving dynamics profile by a training factor,
• wherein the training factor is defined (51) by the driver or a driving assistance system, and
• the averaged distance variable and the training distance variable are compared (52), and
• the result of the comparison is transmitted to a driving assistance system and/or is communicated (53) to the driver of the two-wheeled vehicle, in particular by means of an optical display or acoustic message.

6. Method according to one of the preceding claims, according to which the distance variable is transmitted (35) to a driving assistance system, and the driving assistance system adapts driving dynamics states or parameters of the two-wheeled vehicle, in particular accelerates or decelerates the two-wheeled vehicle and/or adapts a steering angle, on the basis of the distance variable.

7. Device (4) for determining the lateral deflection of the centre of mass (300) of a two-wheeled vehicle, wherein the device (4) has an evaluation unit which in particular carries out a method according to one of the preceding claims, wherein the evaluation unit
• captures (30) a yaw rate variable representing a yaw rate of the two-wheeled vehicle,
• captures (30) a speed variable representing a speed of the two-wheeled vehicle in the direction of travel, and
• determines (31) a first roll angle from the yaw rate variable and the speed variable, according to which the method takes into account biometric parameters of the driver, in particular a weight and/or a height, when determining the first roll angle, and
• captures (32) a second roll angle corresponding to the roll angle of the two-wheeled vehicle, and
• generates, from the first and second roll angles, a distance variable representing a lateral deflection of the centre of mass of the two-wheeled vehicle.

8. Device according to Claim 7, wherein the device (4) contains means which are designed to influence the driving dynamics of the two-wheeled vehicle and to provide manipulated variables for in particular at least one brake, a steering system and/or a drive.

9. Two-wheeled vehicle having a device according to Claim 7 or 8, which in particular carries out a method according to Claims 1 to 6.

10. Computer program which is configured to carry out and/or to control the steps of the method according to one of Claims 1 to 6 and/or is performed out in an evaluation unit in a device (4) according to Claim 7 or 8.

## Revendications

1. Procédé de détermination de la déviation latérale du centre de gravité dans le cas d'un deux-roues, le procédé
• détectant (30) une variable de vitesse angulaire de lacet, qui représente une vitesse angulaire de lacet du deux-roues, et
• détectant (30) une variable de vitesse, qui représente une vitesse du deux-roues dans le sens de marche, et
• définissant (31) un premier angle de roulis à partir de la variable de vitesse angulaire de lacet et de la variable de vitesse, selon lequel le procédé prend en compte des paramètres biométriques du conducteur, en particulier un poids et/ou une taille, lors de la définition du premier angle de roulis, et
• détectant (32) un deuxième angle de roulis, qui correspond à l'angle de roulis du deux-roues, et
• générant à partir du premier et du deuxième angle de roulis une variable de distance, qui représente une déviation latérale du centre de gravité du deux-roues.

2. Procédé selon la revendication 1, selon lequel le procédé tient compte de variables caractéristiques géométriques du deux-roues lors de la définition du premier angle de roulis, en particulier d'un contour des pneus et/ou d'une longueur de l'empattement et/ou d'une hauteur du deux-roues.

3. Procédé selon l'une des revendications précédentes, le procédé
• générant (40) une variable de distance maximale en fonction d'états dynamiques de conduite, en particulier de la vitesse angulaire de lacet, de la vitesse et de l'angle de roulis, et ladite variable de distance maximale représentant une déviation latérale maximale du centre de gravité, pour laquelle le deux-roues roule encore de manière stable, en particulier dans un virage,
• mettant en œuvre une comparaison de la variable de distance maximale à la variable de distance instantanée (41), et
• transmettant le résultat de la comparaison à un système d'aide à la conduite et/ou le communiquant (42) au conducteur du deux-roues, en particulier par un affichage visuel et/ou un message acoustique.

4. Procédé selon l'une des revendications précédentes, selon lequel le procédé
• crée (50) un profil de dynamique de conduite à partir de la variable de distance instantanée détectée et des états de dynamique de conduite détectés, et
• attribue aux états de dynamique de conduite respectifs une variable de distance dans le profil de dynamique de conduite, moyennée à partir de tous les trajets précédents.

5. Procédé selon la revendication 4, selon lequel le procédé détermine une variable de distance d'entraînement en multipliant la variable de distance moyenne mémorisée dans le profil de dynamique de conduite par un facteur d'entraînement,
• le facteur d'entraînement étant fixé par le conducteur ou un système d'aide à la conduite (51), et
• une comparaison de la variable de distance moyenne et de la variable de distance d'entraînement étant mise en œuvre (52), et
• le résultat de la comparaison étant transmis à un système d'aide à la conduite et/ou étant communiqué au conducteur du deux-roues (53), en particulier par un affichage visuel ou un message acoustique.

6. Procédé selon l'une des revendications précédentes, selon lequel la variable de distance est transmise à un système d'aide à la conduite (35) et le système d'aide à la conduite adapte des états ou des paramètres dynamiques de conduite du deux-roues en fonction de la variable de distance, en particulier accélère ou ralentit le deux-roues et/ou adapte un angle de braquage.

7. Dispositif (4) de détermination de la déviation latérale du centre de gravité (300) dans un deux-roues, le dispositif (4) comportant une unité d'évaluation, qui exécute en particulier un procédé selon l'une des revendications précédentes, l'unité d'évaluation
• détectant (30) une variable de vitesse angulaire de lacet, qui représente une vitesse angulaire de lacet du deux-roues,
• détectant (30) une variable de vitesse, qui représente une vitesse du deux-roues dans le sens de marche, et
• définissant (31) un premier angle de roulis à partir de la variable de vitesse angulaire de lacet et de la variable de vitesse, selon lequel le procédé prend en compte des paramètres biométriques du conducteur, en particulier un poids et/ou une taille, lors de la définition du premier angle de roulis, et
• détectant (32) un deuxième angle de roulis, qui correspond à l'angle de roulis du deux-roues, et
• générant à partir du premier et du deuxième angle de roulis une variable de distance, qui représente une déviation latérale du centre de gravité du deux-roues.

8. Dispositif selon la revendication 7, le dispositif (4) contenant des moyens qui sont formés pour influencer la dynamique de conduite du deux-roues et pour fournir des variables de réglage pour en particulier au moins un frein, une direction et/ou un entraînement.

9. Deux-roues avec un dispositif selon la revendication 7 ou 8, qui exécute en particulier un procédé selon la revendication 1 à 6.

10. Programme informatique, qui est mis au point pour exécuter et/ou piloter les étapes du procédé selon l'une des revendications 1 à 6 et/ou pour être mis en œuvre dans une unité d'évaluation dans un dispositif (4) selon la revendication 7 ou 8.
